# EUROPÄISCHE PATENTANMELDUNG

(11) **EP 3 208 083 A1**
(43) Veröffentlichungstag der Anmeldung: **23.08.2017**
(21) Anmeldenummer: 17155334.0
(22) Anmeldetag: 09.02.2017
(51) Int. Cl.: B32B 5/02, B32B 7/04, B32B 15/14, B32B 15/20, B32B 27/12

(54) **VERBUNDWERKSTOFF ZUR HERSTELLUNG EINES DÄMMSTOFFS FÜR EINE THERMISCHE UND/ODER AKUSTISCHE ISOLIERUNG**

(30) Priorität: 17.02.2016 DE 102016102759
(71) Anmelder: Cellofoam GmbH & Co. KG, 88400 Biberach (DE)
(72) Erfinder: Schmid, Torsten, 88483 Burgrieden (DE)
(74) Vertreter: Rings, Rolf

(57) **Zusammenfassung**

Verbundwerkstoff zur Herstellung eines Dämmstoffs für eine thermische und/oder akustische Isolierung in Fahrzeugen, Anlagen, Bauten oder dergleichen sowie Verwendung, Halbzeug und Isolationsmatte aus solch einem Verbundwerkstoff mit einem vliesartigen, flächigen Aufbau (10), welcher mindestens eine Grundschicht (1) und mindestens eine damit verbundene Dämmschicht (2) aufweist, wobei der vliesartige Aufbau (10) ein Volumenvlies mit einer Dicke von mindestens 5 mm bis 100 mm ist und die mindestens eine Dämmschicht (2) eine brandheanmende Zusammensetzung mit einem Anteil von mindestens 30 Gew.-% nicht-leitfähigen Carbonfasem und einem Anteil von maximal 70 Gew.-% Polyester- und/oder Viskosefasern umfasst.

## Beschreibung

Die vorliegende Erfindung betrifft einen Verbundwerkstoff zur Herstellung eines Dämmstoffs für eine thermische und/oder akustische Isolierung in Fahrzeugen, Anlagen, Bauten und dergleichen mit einem vliesartigen, flächigen Aufbau, eine Verwendung eines derartigen Verbundwerkstoffs in isolationsbezogenen Anwendungen, ein Halbzeug zur Isolierung sowie eine Isolationsmatte zur thermischen und/oder akustischen Isolierung. Der Gegenstand der Erfindung bezieht sich insbesondere auf einen Verbundwerkstoff zur Herstellung eines Dämmstoffs als ein Isolationsmaterial, welches eine Isolierung hinsichtlich von Kälte, Wärme und Schall ermöglicht und den Erfordernissen eines Brandschutzes genügt.

Derartige Dämmstoffe als Isolationsmaterial werden heutzutage in verschiedenartigen Anwendungen eingesetzt und verwendet: Beispielsweise werden Dämmstoffmatten oder -platten von Flugzeugen, Schiffen, Schienenfahrzeugen, Nutzfahrzeugen oder industriellen Anlagen eingesetzt, bei welchen die Anforderungen an eine Dämmung bzw. Isolierung in der Regel hoch sind. Dabei spielt nicht nur eine thermische Dämmung wie die Wärmedämmeigenschaft eine Rolle, sondern zudem müssen derartige Dämmstoffe auch weiteren Kriterien, wie zum Beispiel möglichst geringes Gewicht, niedrige Brandgefahr, gute Verarbeitbarkeit und möglichst wirtschaftliche Herstellungskosten, genügen. Die Erfindung betrifft insbesondere einen solchen Verbundwerkstoff zur Herstellung eines Dämmstoffs, welcher in Form einer Plattenware oder Rollenware als ein flächiges, vliesartiges Gebilde bereitgestellt wird, welches für die spezifischen Anwendungen auf die erforderlichen Abmessungen hin zugeschnitten werden kann.

Im Stand der Technik waren bisher verschiedene Formen von Dämmstoffen für die genannten Isolationsanwendungen bekannt: Beispielsweise wurden Matten aus anorganischen Dämmstoffen hierzu verwendet, wie zum Beispiel aus Glaswolle, Basaltwolle oder Steinwolle. Diese Dämmstoffe auf anorganischer Basis haben den Nachteil, dass ihre Verarbeitung recht aufwendig ist und diese teilweise nur unter persönlichen Schutzmaßnahmen (Staubmaske, Schutzanzug) verarbeitet werden können. Zudem sind sie durch ein vergleichsweise hohes Gewicht gekennzeichnet. Auf der anderen Seite wurden als Isolationsmaterial auch Dämmstoffe auf organischer Basis vorgeschlagen. Beispiele hierfür sind sogenannte Vliesstoffe auf Polyesterbasis, die als Rollmaterial in Form von vliesartigen Matten hergestellt werden. Solche Dämmstoffe auf Polyesterbasis haben jedoch aufgrund ihrer sehr geringen Flammwiderstandsdauer erhebliche Nachteile im Hinblick auf den Brandschutz, da solche Vliese auf Polyesterbasis in der Regel schon bei vergleichsweise niedrigen Temperaturen schmelzen. Um auch Anwendungen in brandgefährdeten Umgebungen zu ermöglichen, wurden in der Vergangenheit auch sogenannte spezielle Hochtemperaturdämmstoffe eingesetzt, wie zum Beispiel eine Hochtemperaturwolle, oder es wurden für die Herstellung von solchen mattenartigen Dämmstoffen zur Herstellung von Isolationsmatten spezielle feuerfeste Materialien verwendet, was jedoch im Hinblick auf die Kosten und auf die Umweltverträglichkeit zu Problemen führt.

Vor diesem Hintergrund ist es die Aufgabe der vorliegenden Erfindung, einen Verbundwerkstoff zur Herstellung eines Dämmstoffs für eine thermische und/oder akustische Isolierung bereitzustellen, welcher zum einen gute Isolationseigenschaften aufweist und zudem einen Einsatz insbesondere auch in brandgefährdeten Anwendungen erlaubt. Ferner soll der erfindungsgemäße Verbundwerkstoff mit möglichst geringem Aufwand und bei vertretbaren Kosten hergestellt werden können. Ferner hat die vorliegende Erfindung als Aufgabe, eine Verwendung eines solchen im Hinblick auf den Brandschutz und die Isolationseigenschaften optimierten Dämmstoff zu ermöglichen. Auch sind eine Isolationsmatte und ein Halbzeug aus solch einem Dämmstoff Gegenstand der vorliegenden Erfindung. Diese Aufgaben werden mit einem Verbundwerkstoff zur Herstellung eines Dämmstoffs gemäß den Merkmalen des Anspruchs 1 sowie den nebengeordneten unabhängigen Ansprüchen gelöst. Vorteilhafte Ausgestaltungen und Weiterbildungen der Erfindung sind Gegenstand der abhängigen Ansprüche.

Erfindungsgemäß wird ein Verbundstoff zur Herstellung eines Dämmstoffs für eine thermische und/oder akustische Isolierung in Fahrzeugen, Anlagen, Bauten oder dergleichen mit einem vliesartigen, flächigen Aufbau vorgeschlagen, welcher mindestens eine Grundschicht und mindestens eine mit dieser Grundschicht verbundene Dämmschicht aufweist, wobei der Verbundwerkstoff dadurch gekennzeichnet ist, dass der vliesartige Aufbau ein Volumenvlies mit einer Dicke von mindestens 5 mm bis 100 mm ist und dass die mindestens eine Dämmschicht eine brandhemmende Zusammensetzung mit einem Anteil von mindestens 30 Gew.-% nicht-leitfähigen Carbonfasern und einem Anteil von maximal 70 Gew.-% Polyester- und/oder Viskosefasern umfasst. Der erfindungsgemäße vliesartige Verbundwerkstoff weist somit mindestens zwei verschiedene Schichten auf, nämlich eine sogenannte Grundschicht (oben oder unten), die eine funktionsbezogene Eigenschaft aufweisen kann, sowie eine damit verbundene Dämmschicht, welche mit der in Anspruch 1 angegebenen Zusammensetzung aufgebaut ist und mindestens einen Anteil von 30 Gew.-% von speziellen nicht-leitfähigen Carbonfasern enthält. Die Carbonfasern sind mit Polyesterfasern, Viskosefasern oder einer Mischung aus Polyester- und Viskosefasern zusammen mit diesen Carbonfasern in der Dämmschicht vorgesehen. Die Dämmschicht besteht somit aus verschiedenen Arten von Fasern in der genannten Zusammensetzung, wobei der Anteil von Polyester- und/oder Viskosefasern maximal 70 Gew.-% beträgt.

Diese Form einer Dämmschicht ist durch eine sehr gute brandhemmende Eigenschaft gekennzeichnet. Der Verbundwerkstoff kann zur Dämmung auch in brandgefährdeten Umgebungen und bei Anwendungen mit hohen Brandschutzbestimmungen vorteilhaft eingesetzt werden. Die genannte Zusammensetzung mit nicht-leitfähigen Carbonfasern bietet ferner den Vorteil einer exzellenten thermischen Dämmung aufgrund der sehr niedrigen thermischen Leitfähigkeiten des Materials, aus dem der Verbundwerkstoff hergestellt ist. Mit dem erfindungsgemäßen Verbundwerkstoff kann somit eine sehr hohe Wärmeisolationseigenschaft geboten werden. Ferner ist der Verbundwerkstoff nach der Erfindung durch ein sehr niedriges Gewicht gekennzeichnet. Der Anteil der nicht-leitfähigen Carbonfasern führt zudem zu einer hohen Temperaturbeständigkeit, d. h. die mit einem solchen Verbundwerkstoff hergestellte Isolierung ist sehr feuerfest und hat eine hohe Flammwiderstandsdauer, auch bei erhöhten Temperaturen von beispielsweise über 1000° C. Dabei ist eine Beibehaltung der Dimensionsstabilität auch über einen vergleichsweise langen Zeitraum gewährleistet. Das Material des Verbundwerkstoff gemäß der Erfindung verändert wenig oder gar nicht seine ursprüngliche strukturelle Zusammensetzung, so dass die ursprünglichen Dimensionen und Formen annähernd beibehalten werden können. Nicht zuletzt ist der erfindungsgemäße Verbundwerkstoff auch durch ein sehr gutes Schallabsorptionsvermögen gekennzeichnet, so dass auch eine schallbezogene Isolierung in entsprechenden Anwendungen sicher gewährleistet werden kann. Ein weiterer wesentlicher Vorteil des erfindungsgemäßen Verbundwerkstoffs ist, dass er wasserabweisend ist und somit eine gute hydrophobe Eigenschaft hat. Die flüssigkeitsabstoßende Eigenschaft beruht hauptsächlich auf dem Anteil von nicht-leitfähigen Carbonfasern in der Dämmschicht. Der Verbundwerkstoff kann daher auch in feuchten oder hinsichtlich von Nässe kritischen Anwendungsgebieten eingesetzt werden, wie zum Beispiel in Klimaanlagen oder in Wänden von Zugwaggons oder Flugzeugen. Eine Ansammlung von Feuchtigkeit in den Isolationsschichten, welche mit dem erfindungsgemäßen Verbundwerkstoff hergestellt sind, ist weitestgehend unterbunden. Ein weiterer Vorteil des erfindungsgemäßen Verbundwerkstoffs bei der Anwendung als Isolationsmaterial ist die hohe Chemikalienbeständigkeit. Die Zusammensetzung der Dämmschicht aus mindestens 30 Gew.-% von nicht-leitfähigen Carbonfasern und Polyesterfasern, Viskosefasern oder einer Mischung davon führt insgesamt zu einer Dämmschicht des Verbundwerkstoffs, die gegenüber einer Vielzahl von Chemikalien widerstandsfähig ist. Auch dies erweitert die Anwendungsmöglichkeiten des Verbundwerkstoffs zur Isolierung, beispielsweise in industriellen Anlagen oder ähnlichem.

Die mindestens eine Grundschicht des Verbundwerkstoffs kann verschiedene Formen und Strukturen umfassen, beispielsweise kann es sich um funktionsbezogene Schichten mit besonderen Eigenschaften für die Verarbeitung, Handhabung oder Anbringung des Dämmstoffs als eine Art vliesartige Matte handeln. Die Materialien und Zusammensetzungen der Grundschicht können dabei vielfältig sein. Es kann sich zum Beispiel um Aluminiumfolien, Kunststofffolien, Dämmfolien, vliesartige Matten, Klebeschichten oder ähnliches handeln. Der erfindungsgemäße Verbundwerkstoff ist nicht auf eine bestimmte Anzahl von einer Grundschicht(en) und einer Dämmschicht(en) beschränkt. Beispielsweise können auch mehrere Dämmschichten vorgesehen sein, oder alternativ kann eine einzige Dämmschicht mit einer Mehrzahl von unterschiedliche Funktionen erfüllenden Grundschichten in dem Verbundwerkstoff vorhanden sein.

Nicht zuletzt erfüllt der Verbundwerkstoff zur Herstellung eines Dämmstoffes in Isolierungsanwendungen gemäß der Erfindung sehr hohe Anforderungen an das Brandverhalten und erfüllt somit auch höchste Ansprüche je nach den branchenunterschiedlichen und anwendungsbezogenen Vorgaben an das Brandverhalten derartiger Dämmstoffe für Isolierungen. Der erfindungsgemäße Verbundwerkstoff weist insbesondere aufgrund des Anteils von nicht-leitfähigen Carbonfasern in der Dämmschicht eine besondere brandhemmende Eigenschaft per se auf durch den vergleichsweise hohen Sauerstoffindex von beispielsweise > 35 % oder > 50 % je nach der Dichte und der Zusammensetzung der Dämmschicht. Aus diesem Grund hat der Verbundwerkstoff gemäß der Erfindung ferner die Eigenschaft einer geringen Rauchentwicklung, einer geringen Wärmefreisetzung im Falle eines Brands sowie einer niedrigen Toxizität der Rauchgase schon wegen der schwer entflammbaren Zusammensetzung. Auch ist eine Isolierung aus dem erfindungsgemäßen Verbundwerkstoff durch eine geringe Flammausbreitung gekennzeichnet und vermeidet somit im Wesentlichen jegliche Brandweiterleitung. Das Material des Verbundwerkstoffs gemäß der Erfindung ist derart zusammengesetzt, dass auch ein nachteiliges Wegschmelzen im Falle eines Feuers vermieden wird. Die Dämmschicht bleibt dimensionsstabil und schmilzt nicht. Dadurch kann es zu keiner Entzündung der Schmelze und damit zu keiner Brandweiterleitung durch brennende Schmelze oder durch brennendes Abtropfen kommen.

Gemäß einem vorteilhaften Aspekt der Erfindung ist die Grundschicht des Verbundwerkstoffs eine sogenannte funktionale Schicht des Dämmstoffs mit spezifischen technischen Eigenschaften hinsichtlich einer Strukturstabilisierung, Anbringung, Drainage, Versteifung oder dergleichen. Die Grundschicht des Verbundwerkstoffs, welche mit der Dämmschicht erfindungsgemäß durch Wärme, Druck oder Zuhilfenahme von Klebstoffmedien verbunden ist, bietet somit funktionserweiternde, zusätzliche Eigenschaften, die je nach Fall einer Anwendung erforderlich sind. Die Grundschicht kann aus einem Material, einer Form und einer Struktur gebildet sein, welche eine weitere Isolierung, eine Befestigung, eine Stabilisierung oder eine verbesserte Verarbeitung des Verbundwerkstoffs als Dämmstoff ermöglicht. Wenn die Grundschicht beispielsweise aus Aluminiumfolien in geprägter oder ungeprägter Form hergestellt ist, erleichtert sie nicht nur die Verarbeitung und Anbringung des Verbundwerkstoffs in Form von vliesartigen Dämmmatten, sondern erhöht zudem die Wärmedämmeigenschaft und bildet eine zusätzliche Sperre für eindringende Feuchtigkeit. Im Falle einer Selbstklebeausrüstung kann die Grundschicht auch zur direkten Anbringung des aus mehreren Schichten gebildeten Verbundwerkstoffs in den jeweiligen Anwendungen verwendet werden. Falls die Grundschicht als eine Drainageschicht gebildet ist, dient sie ferner zur Ableitung von Wasser bzw. Feuchtigkeit aus dem Bereich des Dämmmaterials der Isolierung, das aus dem erfindungsgemäßen Verbundwerkstoff hergestellt ist. Verschiedene andere Arten einer Grundschicht sind ebenfalls denkbar, beispielsweise versteifende Materialschichten in Form von metallischen oder nichtmetallischen Folien. Die Anzahl der Grundschichten des mehrschichten Verbundwerkstoffs ist nicht auf eine einzige beschränkt, und es können auch zwei oder mehr derartige Grundschichten vorhanden sein, die mit der jeweiligen Dämmschicht oder den jeweiligen Dämmschichten aus nicht-leitfähigen Carbonfasern verbunden sind.

Gemäß einem vorteilhaften Aspekt der Erfindung weist die Dämmschicht des Verbundwerkstoffs eine brandschutzoptimierte Form von nicht-leitfähigen Carbonfasern mit einem Sauerstoffindex (LOI, *limiting oxygen index*, Grenzsauerstoffkonzentration) von mindestens 40 %, vorzugsweise 50 % auf. Untersuchungen des Erfinders haben ergeben, dass eine solche Form von nicht-leitfähigen Carbonfasern mit einem vergleichsweise hohen Sauerstoffindex von höher als 40 % eine deutlich reduzierte Brandgefahr aufgrund der damit gegebenen hohen Flammwiderstandsdauer bietet. Der erfindungsgemäße Verbundwerkstoff insgesamt mit einer solchen Dämmschicht aus nicht-leitfähigen Carbonfasern ist daher mit einem hocheffektiven Flammenschutz gebildet und kann auch bei kritischen Brandschutzklassen von speziellen Anwendungen vorteilhaft eingesetzt werden. Gemäß der so gebotenen hohen Flammfestigkeit und geringen Brandgefahr kann nach einem weiteren vorteilhaften Aspekt der Erfindung der vliesartige Aufbau des Verbundwerkstoffs insgesamt einen Sauerstoffindex (LOI) von mindestens 35 %, vorzugsweise von 40 % aufweisen. Ein solcher Sauerstoffindex wird durch die spezielle Auswahl und Zusammensetzung bzw. Dichte der Fasermaterialien einerseits der Dämmschicht und andererseits der Grundschicht des Verbundwerkstoffs erreicht. Der mit dem Verbundwerkstoff hergestellte Dämmstoff erfüllt damit sehr hohe Anforderungen an das Brandverhalten und erfüllt insbesondere die höchsten Ansprüche der diesbezüglichen Vorgaben an das Brandverhalten (Brandschutzklassen) von derartigen Isolationsschichten mit vliesartigen Dämmstoffen.

Gemäß einem weiteren vorteilhaften Aspekt der Erfindung sind die mindestens eine Grundschicht und die mindestens eine Dämmschicht aus nicht-leitfähigen Carbonfasern und Polyester- und/oder Viskosefasern mittels einer Wärmebehandlung unter Druckanwendung oder unter Zuhilfenahme zusätzlicher Klebstoffmedien zumindest partiell miteinander verbunden. Mittels der erfindungsgemäßen Wärmebehandlung, die beispielsweise, jedoch nicht ausschließlich in Form einer Wärmestrahlung erfolgen kann, werden die Fasern des Verbundwerkstoffs zumindest an ihrer Oberfläche leicht geschmolzen und verbinden sich bei der Druckanwendung unter der Wärmebehandlung derart miteinander, dass sie anschließend eine ausreichend feste Verbindung zwischen den Schichten des vliesartigen Verbundwerkstoffs bilden. Die Temperaturen der Wärmebehandlung und die Stärke des Drucks bei der Druckanwendung werden dabei je nach der Form der verwendeten Grundschichten und Dämmschichten und insbesondere je nach dem Material der Fasern, welche in der Dämmschicht vorhanden sind, durch einen Fachmann des Gebiets ausgewählt, damit sich die erfindungsgemäße Verbindung herstellen lässt. Mit solch einer Art einer Verbindung der Schichten des Verbundwerkstoffs kann dieser bei vergleichsweise geringen Herstellungskosten realisiert werden.

Gemäß einem weiteren vorteilhaften Aspekt der Erfindung sind die Carbonfasern der Dämmschicht des Verbundwerkstoffs von einem speziellen, schwer entflammbaren Typ mit stabiler Struktur auch bei einer Hitzeaussetzung mit hohen Temperaturen in der Größenordnung von über 1000° C. Dadurch haben der Verbundwerkstoff und der hiermit hergestellte Dämmstoff einer Isolierung eine sehr hohe Flammfestigkeit und gewährleisten eine Beibehaltung oder zumindest annähernde Aufrechterhaltung der ursprünglichen Struktur und der Dimensionsstabilität auch bei Entstehung von Bränden. Der erfindungsgemäße Verbundwerkstoff eignet sich daher für einen hocheffektiven Flammenschutz und kann auch in Anwendungen mit sehr hohen Brandschutzklassen ohne anderweitige Nachteile wie bei im Stand der Technik bekannten Dämmstoffen eingesetzt werden.

Gemäß einem weiteren vorteilhaften Aspekt der Erfindung weisen die Carbonfasern der Dämmschicht eine wasserabweisende Eigenschaft auf. Das Material der Dämmschicht des erfindungsgemäßen Verbundwerkstoffs ist damit insgesamt wasserabweisend und weist eine flüssigkeitsabstoßende Eigenschaft auf, so dass ein Eindringen von Tropfen in die Schichten einer Isolierung, die mit dem erfindungsgemäßen Verbundwerkstoff hergestellt ist, weitestgehend vermieden wird. Durch die Vermeidung eines Eindringens und Ansammelns von Feuchtigkeit in insbesondere die Dämmschicht wird auch die Beibehaltung der hohen Wärmeisolationseigenschaften langfristig gewährleistet. Bei bestimmten Anwendungen kann daher auch auf die Anbringung von Drainageschichten zur Ableitung von Feuchtigkeit verzichtet werden. Das Material selbst des erfindungsgemäßen Verbundwerkstoffs und einer damit hergestellten Wärmedämmung verhindert schon ein unerwünschtes Eindringen von Feuchtigkeit und Wasser oder anderen Flüssigkeiten. Die wasserabweisende bzw. hydrophobe Eigenschaft der Carbonfasern wird durch die spezifische Auswahl von nicht-leitfähigen Carbonfasern realisiert.

Gemäß einem weiteren vorteilhaften Aspekt der Erfindung sind die Carbonfasern der Dämmschicht des Verbundwerkstoffs oxidierte, thermisch stabilisierte Polyacryl-(PAN)-Fasern. Aufwendige Untersuchungen des Erfinders haben gezeigt, dass der Einsatz einer solchen Art von nicht-leitfähigen Carbonfasern in der Dämmschicht in der angegebenen Menge von mindestens 30 Gew.-% in der Dämmschicht zu besonders guten Isolationseigenschaften in Kombination mit hohen Werten einer Flammfestigkeit bzw. eines Brandschutzes führt. Unter nicht-leitfähigen Carbonfasern werden vorliegend solche verstanden, welche eine geringe oder gar keine statische Aufladung haben.

Gemäß einem weiteren vorteilhaften Aspekt der Erfindung ist die Grundschicht des Verbundwerkstoffs eine Aluminiumfolie, eine selbstklebende Befestigungsschicht, eine brandfeste (zusätzliche) Schutzschicht und/oder eine Drainageschicht. Eine solche Grundschicht bietet zusätzliche technische Funktionen für die Herstellung, die Verarbeitung und für den Einsatz des Verbundwerkstoffs als Isolationsmaterial. Beispielsweise können geprägte oder ungeprägte Aluminiumfolien in den Dicken von 0,1 mm bis 1,5 mm zur verbesserten Handhabung und zur strukturellen Stabilisierung des Dämmstoffmaterials eingesetzt werden. Das vliesartige Material der Dämmschicht wird so durch die Grundschicht quasi gefestigt und stabil in den gewünschten Abmessungen und Formen gehalten. Auch bietet eine solche Aluminiumfolie einen zusätzlichen Wärmedämmeffekt und eine wirksame Sperre für Feuchtigkeit und Dampf. Andere Formen von Grundschichten können solche sein, die eine Befestigung des Dämmstoffs an den jeweiligen Einsatzorten ermöglichen: Beispielsweise können selbstklebende Folien mit einer Abdeckfolie hierzu eingesetzt werden, wie sie in ähnlicher Form beispielsweise im Bereich von selbstklebenden Isolierbändern bekannt sind. Eine Grundschicht kann auch in Form einer sogenannten Drainageschicht vorhanden sein, die eine Ableitung von auftretender Feuchtigkeit nach außen hin gewährleistet. Die Drainageschicht kann auch durch eine entsprechend gestaltete Profilierung im unteren Bereich des Verbundwerkstoffs gebildet werden. Hierzu wird in die untere Dämmschicht beispielsweise eine dreidimensionale Struktur eingeschnitten. Als Grundschicht kann in dem vliesartigen Verbundwerkstoff eine einzige Grundschicht oder eine Mehrzahl von unterschiedlichen Formen von funktionalen Grundschichten vorhanden sein. Auch kann eine Grundschicht vorgesehen werden, welche eine Kombination der vorgenannten Eigenschaften erfüllt.

Die Erfindung betrifft ferner eine Verwendung des erfindungsgemäßen Verbundwerkstoffs als eine wärme- oder kältedämmende Isolationsmatte, als eine schalldämmende Isolationsmatte oder als ein Brandschutzdämmstoff oder als eine Kombination davon in Schienenfahrzeugen, Flugzeugen, Schiffen, Nutzfahrzeugen oder industriellen Anlagen.

Ferner betrifft die Erfindung ebenso ein Halbzeug zur thermischen und/oder schallbezogenen Isolierung in Fahrzeugen, Anlagen, Bauten oder dergleichen, welches einen Verbundwerkstoff mit den genannten Eigenschaften gemäß der Ansprüche 1 bis 9 aufweist und welches in Form einer Rollenware oder Plattenware gebildet ist.

Schließlich betrifft die Erfindung der vorliegenden Anmeldung auch eine Isolationsmatte zur thermischen und/oder schallbezogenen Isolierung, welche einen Verbundwerkstoff zur Herstellung des Dämmstoffs der Isolierung gemäß einem der Ansprüche 1 bis 9 enthält.

Weitere Vorteile, Merkmale und Aspekte der vorliegenden Erfindung werden aus der nachfolgenden detaillierten Beschreibung von Ausführungsbeispielen offenbar werden, welche im Zusammenhang mit der beigefügten Zeichnung erfolgt. In der Zeichnung zeigen:
- Fig. 1: eine perspektivische Ansicht eines Ausführungsbeispiels einer erfindungsgemäßen Isolationsmatte mit einem mehrschichten, vliesartigen Verbundwerkstoff als Dämmstoff; und
- Fig. 2: eine perspektivische, teilweise aufgeschnittene Ansicht eines zweiten Ausführungsbeispiels einer erfindungsgemäßen Isolationsmatte aus einem mehrschichtigen, vliesartigen Verbundwerkstoff als Dämmstoff.

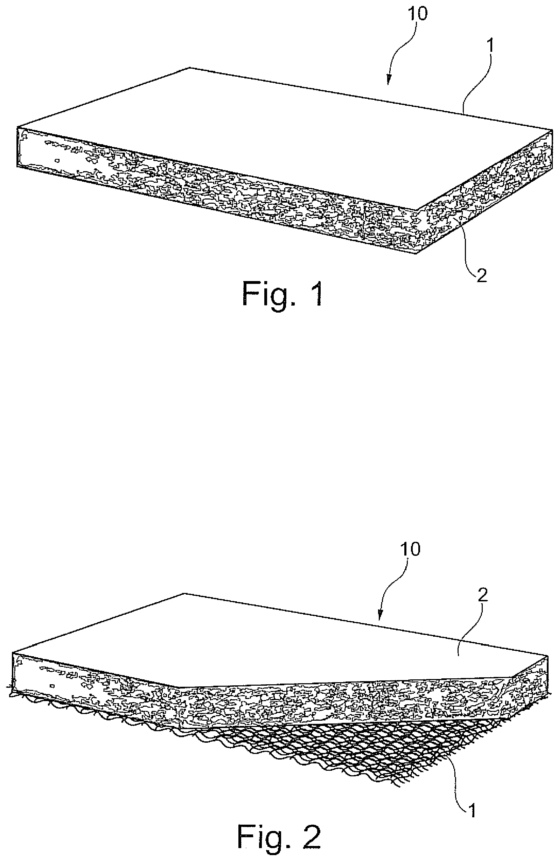

In der Fig. 1 ist ein erstes Ausführungsbeispiel einer erfindungsgemäßen Isolationsplatte bzw. -matte mit einem Verbundwerkstoff aus einem Dämmstoff gemäß der Erfindung in einer perspektivischen Ansicht gezeigt. Der Dämmstoff dieser Isolationsplatte weist einen vliesartigen, flächigen Aufbau 10 aus einer Grundschicht 1 und einer damit verbundenen Dämmschicht 2 auf. Bei diesem ersten Ausführungsbeispiel der Erfindung umfasst der vliesartige Aufbau 10 des Dämmstoffs eine Grundschicht 1 in Form einer geprägten Aluminiumfolie, welche in der Fig. 1 an der Oberseite des flächigen Aufbaus 10 des Dämmstoffs zu sehen ist. Diese Grundschicht 1 in Form einer Aluminiumfolie ist mit der erfindungsgemäßen Dämmschicht 2 verbunden, so dass der Dämmstoff insgesamt in Form eines mattenartigen, vliesförmigen Elements als ein Volumenvlies bereitgestellt wird, wobei auf der Oberseite die glatte Oberfläche der Aluminiumschicht gegeben ist, welche eine Handhabung und weitere Verarbeitung, wie zum Beispiel eine Verklebung, erleichtert. Die als Aluminiumfolie vorgesehene Grundschicht 1 hat ferner die Funktion, eine Erhöhung der strukturellen Stabilität des vliesartigen Aufbaus 10 dieses Dämmstoffs zu bieten. Dies erleichtert die Verarbeitung des Dämmstoffs als beispielsweise ein Isolationsmaterial bei der Isolierung von Wänden eines Zugs oder eines Flugzeugs in Form von vorgeschnittenen Matten. Die als Aluminiumfolie hier vorhandene Grundschicht 1 kann beispielsweise eine Dicke von 0,1 mm bis 1,5 mm aufweisen. Ferner kann diese Grundschicht 1 auch zusätzlich mit einer Selbstklebeausrüstung mit einem Abdeckpapier oder einer Abdeckfolie realisiert werden, so dass dann eine unmittelbare Anbringung des Isolationsmaterials mit diesem erfindungsgemäßen Dämmstoff an der entsprechenden Bestimmungsstelle in dem Fahrzeug oder dergleichen erfolgen kann.

Der vliesartige, flächige Aufbau 10 des Dämmstoffs gemäß der Erfindung ist ein sogenanntes Volumenvlies mit einer Dicke von insgesamt mindestens 5 mm bis in etwa 100 mm. Im Gegensatz zu Flächenvliesen, die lediglich eine geringere Dicke als 5 mm haben, ist somit ein vergleichsweise dicker Dämmstoff für die Realisierung von verschiedenen Isolationsanwendungen bereitgestellt. Der Dämmstoff gemäß der Erfindung ist weiterhin durch eine spezifische Dämmschicht 2 gekennzeichnet, die zumindest teilweise aus nicht-leitfähigen Carbonfasern in einer Menge bezogen auf die Dämmschicht 2 von mindestens 30 Gew.-% und entweder Polyesterfasern oder Viskosefasern oder einer Mischung aus Polyesterfasern und Viskosefasern in einem Anteil von maximal 70 Gew.-% aufgebaut ist. Bei dem gezeigten Ausführungsbeispiel sind lediglich eine einzige Grundschicht 1 und eine einzige Dämmschicht 2 vorgesehen. Es können jedoch mehrere Grundschichten 1 oder aber auch mehrere Dämmschichten 2 in verschiedenen Kombinationen innerhalb eines flächigen, vliesartigen Aufbaus 10 des erfindungsgemäßen Dämmstoffs vorhanden sein.

Die nicht-leitfähigen Carbonfasern der Dämmschicht 2 sind bei diesem Ausführungsbeispiel oxidierte, thermisch stabilisierte Polyacryl-(PAN)-Fasern, die einen vergleichsweise hohen Sauerstoffindex LOI (engl.: *limiting oxygen index*) haben. Die so gebildeten Carbonfasern sind bei festgelegten Temperaturen derart karbonisiert, dass sie nicht-leitfähig sind, und ermöglichen daher eine gute Herstellbarkeit des erfindungsgemäßen Verbundstoffs, da es keine bzw. keine erhebliche statische Aufladung der Fasern gibt. Aufgrund des vergleichsweise hohen Sauerstoffindex LOI der Carbonfasern der Dämmschicht 2 von > 35 %, vorzugsweise von > 40 % bzw. von insbesondere > 50 % ist der erfindungsgemäße Dämmstoff aus mehreren Schichten 1, 2 insgesamt sehr flammenbeständig und hitzebeständig. Die Dämmstoffe sind auch bei hohen Temperaturen von beispielsweise über 1000° C widerstandsfähig und behalten ihre ursprüngliche Form und Abmessung bei (hohe Dimensionsstabilität). Aufgrund dieser hohen Flammwiderstandsdauer, die bis zu 30 s bei der genannten Temperatur betragen kann, ist ein hocheffektiver Flammenschutz mit dem erfindungsgemäßen Dämmstoff möglich, der auch sehr hohe Brandschutzklassen bei kritischen Anwendungsgebieten erfüllen kann. Ein weiterer Vorteil des erfindungsgemäßen Dämmstoffs mit dem genannten Anteil von Carbonfasern in der Dämmschicht 2 ist, dass dieser wasserabweisend und flüssigkeitsabstoßend ist. Auch ist der Dämmstoff durch eine hohe Hydrolysebeständigkeit gekennzeichnet, so dass er insbesondere auch in Feuchtbereiten in vorteilhafter Weise eingesetzt werden kann. Der erfindungsgemäße Dämmstoff ist mit einem hohen Schallabsorptionsvermögen versehen und weist sehr gute Wärmedämmeigenschaften auf. Aufgrund der spezifischen Zusammensetzung der mehreren Schichten 1, 2 des vliesartigen Dämmstoffs weist der Dämmstoff eine von der Dämmstoffdichte abhängige sehr geringe thermische Leitfähigkeit von beispielsweise in der Größenordnung von 0,0330 W/m x K auf. Auf diese Weise kann eine sehr hohe Wärmeisolationseigenschaft durch den erfindungsgemäßen Verbundstoff mit solch einem Dämmstoff bereitgestellt werden. Nicht zuletzt ist der erfindungsgemäße Dämmstoff durch eine hohe Chemikalienbeständigkeit gekennzeichnet. Er bietet sich daher auch als Isolationsmaterial in industriellen Anlagen zur Verarbeitung von Chemikalien besonders an.

Mit der Erfindung werden ein Dämmstoff sowie Isolationsmaterialien zur Herstellung von thermischen und/oder schallbezogenen Isolierungen bereitgestellt, die besonders hohe Anforderungen an ein Brandverhalten oder an Einsätze in kritischen bzw. aggressiven Bereichen bieten: Mit der Erfindung werden höchste Ansprüche an Brandschutzklassen und branchenunterschiedliche Vorgaben an das Brandverhalten eines solchen Dämmstoffs erreicht. Der erfindungsgemäße Dämmstoff mit mindestens einer Dämmschicht 2 wie in Anspruch 1 definiert weist im Hinblick auf die brandhemmenden Eigenschaften insbesondere folgende Merkmale auf:
- einen hohen Sauerstoffindex von > 35 % oder von sogar > 50 % je nach der Dichte des vliesartigen, flächigen Aufbaus
- eine geringe Rauchentwicklung
- eine geringe Wärmefreisetzung
- eine geringe Toxizität der Rauchgase
- eine geringe Flammausbreitung
- keine Brandweiterleitung
- kein Wegschmelzen

Bei Versuchen mit dem erfindungsgemäßen Verbundstoff als Dämmstoff für die Herstellung von Isolierungen in verschiedenen brandoptimierten Anwendungen im Vergleich zu herkömmlichen derartigen Dämmstoffen hat sich gezeigt, dass der erfindungsgemäße Dämmstoff beispielsweise über einen Zeitraum von bis zu 30 s einer Einwirkung von Flammen mit Temperaturen von über 1000° C standhält, ohne dass die ursprüngliche Form oder Abmessungen wesentlich verändert werden. Im Gegensatz dazu wurde bei vergleichbaren Dämmstoffen aus dem Stand der Technik bei solch einer Temperatur und über diese Zeitdauer das Material entweder vollständig zerstört oder ist geschmolzen. Nicht zuletzt weist der erfindungsgemäße Dämmstoff auch erhebliche Vorteile aufgrund seiner wasserabweisenden bzw. hydrophoben Eigenschaft auf: Auftreffende Wassertropfen oder Feuchtigkeit dringen lediglich geringfügig oder gar nicht in das Innere des vliesartigen Aufbaus 10 ein, so dass sich keine Feuchtigkeit in diesem Bereich ansammelt und die guten Wärmedämmeigenschaften auch bei vorhandener Feuchtigkeit beibehalten werden können.

Die Fig. 2 zeigt in einer perspektivischen, teilweise aufgeschnittenen Ansicht ein zweites Ausführungsbeispiel einer erfindungsgemäßen Isolationsplatte bzw. -matte aus einem mehrschichtigen Verbundwerkstoff zur Herstellung eines Dämmstoffs. Bei diesem zweiten Ausführungsbeispiel ist eine Dämmschicht 2 in dem mehrschichtigen Aufbau 10 vorgesehen, die mit einer grob geflochtenen Drainageschicht als eine Form einer Grundschicht 1 verbunden ist. Eine Verbindung zwischen der Grundschicht 1 und der Dämmschicht 2 erfolgt bei diesen Ausführungsbeispielen und gemäß der Erfindung mittels einer Wärmebehandlung unter Druckanwendung. Die verschiedenen Schichten 1, 2 des Aufbaus 10 werden dabei durch Walzen hindurchgeführt bei einer Anwendung von Wärme eines festgelegten Temperaturbereichs mittels Wärmestrahlern. Die Temperatur der Wärmestrahlung ist dabei derart, dass zumindest an den Oberflächen die den Aufbau 10 bildenden Fasern leicht angeschmolzen werden, so dass sich die Carbonfasern und/oder die Polyesterfasern einerseits sowie die Materialien der Grundschicht 1 andererseits miteinander verbinden und letztendlich die Dämmschicht 2 an der Grundschicht 1 zur Herstellung eines fest verbundenen, kompakten, vliesartigen Dämmstoffs in Form eines flächigen Aufbaus 10 angebracht wird. Diese Art von Verbindung hat den Vorteil, dass keine zusätzlichen Verklebungen oder Zwischenschichten für die Herstellung der Verbindung, wie im Stand der Technik erforderlich, benötigt werden. Erfindungsgemäß können die Schichten 1, 2 auch auf andere Art und Weise miteinander verbunden werden.

## Patentansprüche

1. Verbundwerkstoff zur Herstellung eines Dämmstoffs für eine thermische und/oder akustische Isolierung in Fahrzeugen, Anlagen, Bauten oder dergleichen mit einem vliesartigen, flächigen Aufbau (10), welcher mindestens eine Grundschicht (1) und mindestens eine damit verbundene Dämmschicht (2) aufweist, **dadurch gekennzeichnet, dass** der vliesartige Aufbau (10) ein Volumenvlies mit einer Dicke von mindestens 5 mm bis 100 mm ist und dass die mindestens eine Dämmschicht (2) eine brandhemmende Zusammensetzung mit einem Anteil von mindestens 30 Gew.-% nicht-leitfähigen Carbonfasern und einem Anteil von maximal 70 Gew.-% Polyester- und/oder Viskosefasern umfasst.

2. Verbundwerkstoffnach Anspruch 1, **dadurch gekennzeichnet, dass** die Grundschicht (1) eine funktionale Schicht des Dämmstoffs mit spezifischen technischen Eigenschaften hinsichtlich einer Strukturstabilisierung, Anbringung, Drainage, Versteifung oder dergleichen ist.

3. Verbundwerkstoff nach Anspruch 1 oder 2, **dadurch gekennzeichnet, dass** die Dämmschicht (2) eine brandschutzoptimierte Form von nicht-leitfähigen Carbonfasern mit einem Sauerstoffindex (LOI, *limiting oxygen index*, Grenzsauerstoffkonzentration) von höher als 40 %, vorzugsweise 50 % aufweist.

4. Verbundwerkstoff nach einem der vorangegangenen Ansprüche, **dadurch gekennzeichnet, dass** der vliesartige Aufbau (10) insgesamt einen Sauerstoffindex (LOI) von mindestens 35 %, vorzugsweise 40 % aufweist.

5. Verbundwerkstoff nach einem der vorangegangenen Ansprüche, **dadurch gekennzeichnet, dass** die Grundschicht (1) und die Dämmschicht (2) mittels einer Wärmebehandlung unter Druckanwendung oder unter Zuhilfenahme zusätzlicher Klebstoffmedien zumindest partiell miteinander verbunden sind.

6. Verbundwerkstoff nach einem der vorangegangenen Ansprüche, **dadurch gekennzeichnet, dass** die Carbonfasern der Dämmschicht (2) von einem schwer entflammbaren Typ mit stabiler Struktur auch bei Hitzeaussetzung mit hohen Temperaturen in der Größenordnung von über 1000°C sind.

7. Verbundwerkstoff nach einem der vorangegangenen Ansprüche, **dadurch gekennzeichnet, dass** die Carbonfasern der Dämmschicht (2) eine wasserabweisende Eigenschaft aufweisen.

8. Verbundwerkstoff nach einem der vorangegangenen Ansprüche, **dadurch gekennzeichnet, dass** die Carbonfasern der Dämmschicht (2) oxidierte, thermisch stabilisierte Polyacryl-(PAN)-Fasern sind.

9. Verbundwerkstoff nach einem der vorangegangenen Ansprüche, **dadurch gekennzeichnet, dass** die Grundschicht (1) eine Aluminiumfolie, eine Kunststofffolie, eine Dämmfolie, eine selbstklebende Befestigungsschicht, eine brandfeste Schutzschicht und/oder eine Drainageschicht ist.

10. Verwendung des Verbundwerkstoffs gemäß einem der Ansprüche 1 bis 9 als wärme- oder kältedämmende Isolationsmatte in Schienenfahrzeugen, Flugzeugen, Schiffen, Nutzfahrzeugen oder Industrieanlagen.

11. Verwendung des Verbundwerkstoffs gemäß einem der Ansprüche 1 bis 9 als schalldämmende Isolationsmatte in Schienenfahrzeugen, Flugzeugen, Schiffen, Nutzfahrzeugen oder Industrieanlagen.

12. Verwendung des Verbundwerkstoffs gemäß einem der Ansprüche 1 bis 9 als Brandschutzdämmstoff in Schienenfahrzeugen, Flugzeugen, Schiffen, Nutzfahrzeugen oder Industrieanlagen.

13. Verwendung des Verbundwerkstoffs gemäß einem der Ansprüche 1 bis 9 als Halbzeug in Isolationsanwendungen in Form von anwendungsspezifisch zugeschnittenen Isolationsmatten oder Isolationsplatten.

14. Halbzeug zur thermischen und/oder schallbezogenen Isolierung in Fahrzeugen, Anlagen, Bauten oder dergleichen, **dadurch gekennzeichnet, dass** es einen Verbundwerkstoff nach einem der Ansprüche 1 bis 9 aufweist und in Form einer Rollenware oder Plattenware gebildet ist.

15. Isolationsmatte zur thermischen und/oder akustischen Isolierung, enthaltend einen Verbundwerkstoff nach einem der Ansprüche 1 bis 9.
